(19) Europäisches Patentamt / European Patent Office / Office européen des brevets

(11) **EP 3 842 478 A1**

(12) **EUROPEAN PATENT APPLICATION**
published in accordance with Art. 153(4) EPC

(43) Date of publication:
**30.06.2021 Bulletin 2021/26**

(21) Application number: **19851418.4**

(22) Date of filing: **20.08.2019**

(51) Int Cl.:
***C08J 5/04*** (2006.01)

(86) International application number:
**PCT/JP2019/032395**

(87) International publication number:
**WO 2020/040121 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **22.08.2018 JP 2018155451**

(71) Applicant: **Toray Industries, Inc.**
**Tokyo, 103-8666 (JP)**

(72) Inventors:
• **KOSHI, Masayuki**
  **Nagoya-shi, Aichi 455-8502 (JP)**
• **ISHIDA, Shoma**
  **Nagoya-shi, Aichi 455-8502 (JP)**
• **OME, Hiroyuki**
  **Nagoya-shi, Aichi 455-8502 (JP)**

(74) Representative: **Hoefer & Partner Patentanwälte mbB**
**Pilgersheimer Straße 20**
**81543 München (DE)**

(54) **FIBER-REINFORCED THERMOPLASTIC RESIN SUBSTRATE AND LAMINATE USING SAME**

(57) Provided is a fiber-reinforced thermoplastic resin comprising a continuous fiber base material made from continuous reinforcing fibers, and a thermoplastic resin applied to the surface thereof. The thermoplastic resin coats the entire surface of the continuous fiber base material in a solidified state, and impregnates the continuous fiber base material while leaving voids therein, with these voids being formed intermittently in the direction in which the fibers are arranged. Also provided is a laminate using the fiber-reinforced thermoplastic resin base material.

With regard to the fiber-reinforced thermoplastic resin base material having a thermoplastic resin as a matrix, the surface of the fiber-reinforced base material is coated by the thermoplastic resin with a high uniformity, and by impregnating the fiber-reinforced base material with the matrix resin uniformly while leaving voids therein, a fiber-reinforced thermoplastic resin base material is provided which has excellent shaping properties and ease of handling.

FIG. 1

**Description**

Technical Field of the Invention

Our invention relates to a fiber-reinforced thermoplastic resin base material and a laminate using the same.

Background Art of the Invention

Fiber-reinforced thermoplastic resin base materials, which are made by impregnating continuous reinforcing fibers with thermoplastic resin and are excellent in characteristics such as specific strength, specific rigidity, weight saving, heat resistance and chemical resistance, are suitable for use in transportation equipment such as airplane and automobile, sport gears or electric/electronic parts. The recent rise in demand of saving weight of airplane, automobile or the like has promoted a substitution from metal parts to resin parts, a downsizing and a modularization of parts, so that development of material excellent in formability is being demanded.

Patent document 1 discloses a constructional composite material excellent in formability of fiber-reinforced resin intermediate made by impregnating reinforcing fiber base material with resin heated above its melting point on the outer surface of the base material consisting of opened reinforcing fibers. Such produced fiber-reinforced resin intermediate having a gap opening outward and containing the semi-impregnated resin is excellent in formativeness and impregnation. The fiber-reinforced resin intermediate laminated can be heated/pressurized to form a shaped product of fiber-reinforced resin which has a desirable fiber volume content even with a complicated shape, fully-impregnated with less defects like void.

Patent document 2 discloses a fiber-reinforced thermoplastic resin sheet in a semi-preg state made by heating/pressurizing a reinforcing fiber sheet consisting of unidirectionally-oriented reinforcing fibers stacked with a nonwoven fabric of thermoplastic resin fiber to impregnate reinforcing fiber bundles with thermoplastic resin melted from the thermoplastic resin nonwoven fabric in the presence of voids. The semi-impregnated type of fiber-reinforced thermoplastic resin sheet can shorten the production time of fiber-reinforced thermoplastic resin sheet and can complete the impregnation at the time of heating/pressurizing the semi-impregnated type of fiber-reinforced thermoplastic resin sheet which can be flexible and thin to reduce unimpregnated parts.

Prior art documents

Patent documents

Patent document 1: JP2016-078360-A
Patent document 2: JP2003-165861-A

Summary of the Invention

Problems to be solved by the Invention

Although the technique disclosed in Patent document 1 can improve the formativeness by voids opening outward, outer openings might make the resin provided non-uniformly to generate resin-rich parts at the time of forming. Further, the reinforcing fiber bundle might be split or misaligned at the time of lamination to deteriorate handling ability.

The fiber-reinforced thermoplastic resin sheet disclosed in Patent document 2 is formed by pressurizing as heating the fabric consisting of thermoplastic resin fibers stacked with the fiber-reinforced sheet. Therefore in the fiber-reinforced thermoplastic resin sheet, melted thermoplastic resin layer is pressurized to become consolidated, so that voids are formed partially while impregnation tends to progress to form mixture of impregnated parts and voids, causing a problem that the air incapable of coming out of the reinforcing fiber sheet tends to form voids in the shaped product.

Accordingly, it could be helpful to provide a fiber-reinforced thermoplastic resin base material made from thermoplastic resin matrix having a high formativeness and a high handling ability achieved by uniformly coating the reinforcing fiber base material surface with thermoplastic resin to impregnate the reinforcing fiber base material with matrix resin in the presence of voids.

Means for solving the Problems

To achieve the above-described object, our invention has the following configurations.

[1] A fiber-reinforced thermoplastic resin base material comprising a continuous fiber base material consisting of continuous reinforcing fibers and a thermoplastic resin applied to a surface of the continuous fiber base material, in which the continuous fiber base material containing a void is impregnated with the thermoplastic res in solidified to coat a whole of the surface of the continuous fiber base material, the void being formed intermittently in the fiber orientation direction.

[2] The fiber-reinforced thermoplastic resin base material according to [1], wherein the thermoplastic resin has an impregnation distance of 20 $\mu$m to 60 $\mu$m corresponding to 20% to 80% of a thickness of the fiber-reinforced thermoplastic resin base material.

[3] The fiber-reinforced thermoplastic resin base material according to [1] or [2], wherein the thermoplastic resin has an impregnation distance of the thermoplastic of more than a surface layer thickness of the thermoplastic resin.

[4] The fiber-reinforced thermoplastic resin base material according to any one of [1] to [3], wherein the thermoplastic resin is selected from a group of polyphenylene sulfide resin (PPS), polyarylene ether ketone resin (PAEK), polyether sulfone resin (PES), polyetherimide (PEI) and liquid crystal polymer (LCP), or is a polymer alloy comprising two or more kinds selected from the group.

[5] The fiber-reinforced thermoplastic resin base material according to [4], wherein the thermoplastic resin is the polymer alloy.

[6] The fiber-reinforced thermoplastic resin base material according to [5], wherein the polymer alloy has a bicontinuous phase structure having a structural period of 0.001 to 10 $\mu$m or a sea-island structure consisting of island phase and sea phase having a particle diameter of 0.001 to 10 $\mu$m.

[7] The fiber-reinforced thermoplastic resin base material according to any one of [1] to [6], wherein the thermoplastic resin is applied to a laminate consisting of two or more layers of the continuous fiber base material on a surface and between the layers.

[8] The fiber-reinforced thermoplastic resin base material according to any one of [1] to [7], wherein a void ratio is 10% to 60%.

[9] The fiber-reinforced thermoplastic resin base material according to any one of [1] to [8], wherein the reinforcing fiber is a carbon fiber.

[10] A laminated product comprising a laminate of partially welded fiber-reinforced thermoplastic resin base materials according to any one of [1] to [9].

[11] The laminated product according to [10], wherein the fiber-reinforced thermoplastic resin base materials are partially welded by an ultrasonic-welding.

[12] A shaped product comprising a fiber-reinforced thermoplastic resin base material according to any one of [1] to [11].

[13] A composite shaped product comprising: a fiber-reinforced thermoplastic resin base material according to any one of [1] to [9]; or a shaped product according to [12], wherein the base material or the shaped product is integrated with a metal material or a shaped product of the metal, or with a resin material or a shaped product of the resin.

Effect according to the Invention

Our invention makes it possible to provide a fiber-reinforced thermoplastic resin base material having a high handling ability and a high formativeness achieved by uniformly coating the reinforcing fiber base material surface with thermoplastic resin to impregnate the reinforcing fiber base material with matrix resin in the presence of voids provided continuously along the fiber direction.

Brief explanation of the drawings

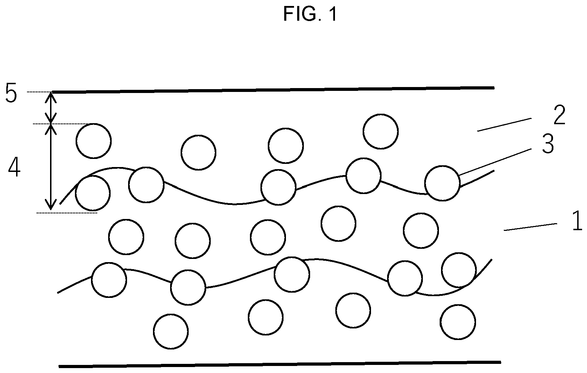

[Fig. 1] Fig. 1 is a schematic section view of an example of our fiber-reinforced thermoplastic resin base material.

Embodiments for carrying out the Invention

Hereinafter, our invention will be explained with examples in detail. Our fiber-reinforced thermoplastic resin base material comprises a continuous fiber base material consisting of continuous reinforcing fibers and thermoplastic resin applied to its surface, in which the continuous fiber base material containing voids is impregnated with the thermoplastic resin solidified to coat a whole surface of the continuous fiber base material, the voids being formed intermittently in the oriented fiber direction.

In the specification, the continuous fiber base material consists of continuous reinforcing fiber base material in which reinforcing fibers are not discontinuous. Our continuous fiber base material has a formation and an array such as unidirectionally-oriented continuous fibers, woven fabric (cloth), knitted fabric, gimp and tow. Above all, it is preferable that the reinforcing fibers are unidirectionally-oriented from a viewpoint of efficient enhancement of mechanical characteristics in a certain direction.

The reinforcing fiber is not limited in particular, and may be carbon fiber, metal fiber, organic fiber, inorganic fiber or the like. Two or more kinds of them may be used together. The reinforcing fiber of carbon fiber can be used to make a lightweight fiber-reinforced thermoplastic resin base material have high mechanical characteristics.

The carbon fiber may be a PAN-based carbon fiber made from polyacrylonitrile (PAN) fiber, a pitch-based carbon fiber made from petroleum tar or petroleum pitch, a cellulose-based carbon fiber made from viscose rayon, cellulose acetate or the like, a vapor-phase growth-type carbon fiber made from hydrocarbons or the like, or a graphitized fiber thereof. Among these carbon fibers, it is preferable to employ the PAN-based carbon fiber from a viewpoint of balance between strength and elastic modulus.

The metal fiber may be a fiber made of metal such as iron, gold, silver, copper, aluminum, brass and stainless steel.

The organic fiber may be a fiber consisting of organic material such as aramid, polybenzoxazole (PBO), polyphenylene sulfide, polyester, polyamide and polyethylene. The aramid fiber may be a para-aramid excellent in strength and elastic modulus or may be a meta-aramid excellent in incombustibility and long-term heat resistance. The para-aramid fiber may be poly-p-phenylene terephthalamide fiber, copolyparaphenylene-3,4'-oxydiphenylene terephthalamide fiber or the like while the meta-aramid fiber may be poly-m-phenylene isophthalamide fiber. It is preferable that the aramid fiber is made of para-aramid fiber having an elastic modulus higher than that of meta-aramid fiber.

The inorganic fiber may be a fiber made of inorganic material such as glass, basalt, silicon carbide, silicon nitride or the like. The glass fiber may be E glass fiber (for electric use), C glass fiber (for corrosion resistance), S glass fiber, T glass fiber (high strength and high elastic modulus) or the like. The basalt fiber is highly heat resistant, made by fiberizing basalt mineral. The basalt generally contains iron compound of 9-25 wt% of FeO or $FeO_2$ as well as titanium compound of 1-6 wt% of TiO or $TiO_2$. These components increased can be fiberized in a melted state.

In our fiber-reinforced thermoplastic resin base material, it is preferable that the reinforcing fiber comprises a carbon fiber, from a viewpoint of high mechanical characteristics required to the purpose of reinforcing member.

In our fiber-reinforced thermoplastic resin base material, the continuous reinforcing fiber base material typically consists of one or more reinforcing fiber bundles in which a number of single fibers are bundled. It is preferable that the reinforcing fiber bundle has a total filament number (the number of single fibers per bundle) of 1,000 to 2,000,000. From a viewpoint of productivity, it is preferable that the total filament number is 1,000 to 1,000,000. It is more preferably 1,000 to 600,000, particularly preferably 1,000 to 300,000. The upper limit of the total filament number should be decided so that the productivity, dispersibility and handling ability are maintained in a good balance.

It is preferable that the reinforcing fiber bundle consists of 1,000 to 50,000 of bundled reinforcing single fibers having an average diameter of 5 to 10 $\mu$m.

The thermoplastic resin may be a polyester such as polyethylene terephthalate (PET) resin, polybutylene terephthalate (PBT) resin, poly trimethylene terephthalate (PTT) resin, polyethylene naphthalate (PEN) resin and liquid crystalline polyester resin, a polyolefin such as polyethylene (PE) resin, polypropylene (PP) resin and polybutylene resin, a styrene-based resin, or polyoxymethylene (POM) resin, polyamide (PA) resin, polycarbonate (PC) resin, polymethyl methacrylate (PMMA) resin, polyvinyl chloride (PVC) resin, polyphenylene sulfide (PPS) resin, polyphenylene ether (PPE) resin, modified PPE resin, polyimide (PI) resin, polyamide-imide (PAI) resin, polyetherimide (PEI) resin, polysulfone (PSU) resin, modified PSU resin, polyether sulfone resin, polyketone (PK) resin, polyarylene ether ketone resin (PAEK), polyarylate (PAR) resin, polyether nitrile (PEN) resin, phenolic resin, phenoxyresin, a fluorine-based resin such as the polytetrafluoroethylene resin, a thermoplastic elastomer such as polystyrene-based resin, polyolefin-based resin, polyurethane-based resin, polyester-based resin, polyamide-based resin, polybutadiene-based resin and fluorine-based resin. It may also be a copolymer, a modification or a blend thereof. From viewpoints of mechanical characteristics and heat resistance, it is preferable that the resin is selected from polyphenylene sulfide resin (PPS), polyarylene ether ketone resin (PAEK), polyether sulfone resin (PES), polyetherimide (PEI) and liquid crystal polymer (LCP). It is more preferable that the resin is a polymer alloy made from two or more kinds of the resin described above.

The polyarylene ether ketone resin (PAEK) includes polyether ketone (PEK), polyether ether ketone (PEEK), polyether ether ketone ketone (PEEKK), polyether ketone ketone (PEKK), polyether ketone ether ketone ketone (PEKEKK), polyether ether ketone ether ketone (PEEKEK), polyether ether ether ketone (PEEEK) and polyether diphenyl ether ketone (PEDEK), and a copolymer, a modification and a blend thereof.

It is preferable that the polymer alloy has a bicontinuous phase structure having a structural period of 0.001 to 10 $\mu$m. It is also preferable that the polymer alloy has a sea-island structure consisting of island phase and sea phase having a particle diameter of 0.001 to 10 $\mu$m. Good mechanical characteristics and heat resistance can be achieved by controlling the structure to the bicontinuous phase structure having a structural period of 0.001 to 10 $\mu$m or the sea-island structure having a particle diameter of 0.001 to 10 $\mu$m. It is more preferable that the polymer alloy has the bicontinuous phase structure having a structural period of 0.01 to 5 $\mu$m or the sea-island structure consisting of island phase and sea phase having a particle diameter of 0.01 to 5 $\mu$m. It is further preferable that the polymer alloy has the bicontinuous phase structure having a structural period of 0.1 to 1 $\mu$m or the sea-island structure having a particle diameter of 0.05 to 1 μm.

A polymer alloy made of three or more kinds of thermoplastic resins may have a configuration such as (i) combination of bicontinuous structure and sea-island structure, (ii) combination of different kinds of bicontinuous structures and (iii) multiphase continuous structure made of three or more kinds of resins, or the like of combination of various structures.

The bicontinuous phase structure or a dispersion structure is confirmed by identifying a regular periodical structure. For the confirmation, it is necessary to detect a scattering local maximum by a scatter measurement with small-angle X-ray scattering device or a light scattering device as well as a bicontinuous phase structure by optical microscopy observation or transmission electron microscopy observation. Such a confirmation of scattering local maximum by a scatter measurement proves a regular phase separation structure having a certain period, in which period Am [nm] corresponds to a structure period of bicontinuous phase structure or an interparticle distance of dispersion structure. The period can be calculated by Formula 1 from wavelength λ [nm] of scattering light in the scattering substance and scattering angle θm [°] at the scattering local maximum.

(Formula 1)

$$\Lambda m = (\lambda/2)/\sin(\theta m/2)$$

Even when the structure period of bicontinuous phase structure or the interparticle distance of dispersion structure is within the above-described range, a physical impact might be given to the polymer alloy to break from a coarse part in the structure so that desirable characteristics cannot be achieved. Therefore, it is important that the structure period of bicontinuous phase structure or the interparticle distance of dispersion structured is uniformly set in the polymer alloy. Such a uniformity in the polymer alloy can be evaluated by the above-described small-angle X-ray scattering measurement or light scattering measurement. Since the small-angle X-ray scattering measurement and the light scattering measurement have different size of phase separation analyzable, any one of the measurements should be chosen according to the size of phase separation of polymer alloy to be analyzed. The small-angle X-ray scattering measurement and the light scattering measurement can provide information of distribution in addition to the size of the structure period of bicontinuous phase structure or the interparticle distance of dispersion structure. Specifically, scattering angle θm [°] at the peak of scattering local maximum in the spectrum provided by the measurement corresponds to the size of the structure period of bicontinuous phase structure or the interparticle distance of dispersion structure while the way of peak extension corresponds to the uniformity of structure. It is preferable that the structural uniformity is high enough to achieve excellent physical properties such as mechanical characteristics, like our polymer alloy having a local maximum of scattering spectrum provided by the small-angle X-ray scattering measurement or the light scattering measurement.

In our fiber-reinforced thermoplastic resin base material, the reinforcing fiber base material is impregnated with thermoplastic resin in the presence of voids while it may contain filler, other kind of polymer, additive or the like as needed.

The filler may be any filler used with resin to improve strength, rigidity, heat resistance or dimension stability of fiber-reinforced thermoplastic resin base material or its shaped product. The filler includes a fibrous inorganic filler such as glass fiber, carbon fiber, potassium titanate whisker, zinc oxide whisker, aluminum borate whisker, aramid fiber, alumina fiber, silicon carbide fiber, ceramic fiber, asbestos fiber, gypsum fiber and metal fiber, as well as non-fibrous inorganic filler such as wollastonite, zeolite, sericite, kaolin, mica, talc, clay, pyrophyllite, bentonite, montmorillonite, asbestos, aluminosilicate, alumina, silicon oxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminium hydroxide, glass bead, ceramic bead, boron nitride, silicon carbide and silica. It is possible to contain two or more kinds thereof. The filler may be hollow. It may be the one treated with coupling agent made of compound such as isocyanate-based compound, organosilane-based compound, organotitanate-based compound, organoborane-based compound and epoxy compound. The montmorillonite may be an organic montmorillonite made by cation-exchanging the interlayer ion with organic ammonium salt. The fibrous filler consisting of discontinuous fibers can function without deteriorating the reinforcement effect of reinforcing fiber consisting of continuous fibers.

The other kind of polymer includes polyolefin such as polyethylene and polypropylene, an elastomer such as polyamide-based elastomer and polyester-based elastomer, or polyester, polycarbonate, polyphenylene ether, polyphenylene sulfide, liquid crystalline polymer, polysulfone, polyether sulfone, ABS resin, SAN resin, polystyrene or the like. It is possible to contain two or more kinds thereof. To improve impact resistance of fiber-reinforced terminal-modified polyamide resin base material made from polyamide resin composition, it is preferable to employ an impact modifier made of modified polyolefin such as (co)polymer of olefin-based compound and/or conjugated diene-based compound, or polyamide-based elastomer, polyester-based elastomer or the like.

The (co)polymer of olefin-based compound and/or conjugated diene-based compound may be ethylene-based copolymer, conjugated diene-based polymer, conjugated diene-aromatic vinyl hydrocarbon-based copolymer or the like.

The ethylene-based copolymer may be a ethylene copolymer with α-olefin having 3 or more of carbon number, unconjugated diene, vinyl acetate, vinyl alcohol, α,β-unsaturated carboxylic acid or its derivative, or the like. The α-olefin of 3 or more of carbon number includes propylene and butene-1. The unconjugated diene includes 5-methylidene-2-norbornene, 5-ethylidene-2-norbornene, dicyclopentadiene and 1,4-hexadiene. The α,β-unsaturated carboxylic acid includes acrylic acid, methacrylic acid, ethacrylic acid, crotonic acid, maleic acid, fumaric acid, itaconic acid, citraconic acid and butene dicarboxylic acid. The derivative of α,β-unsaturated carboxylic acid includes alkyl ester, aryl ester, glycidyl ester, acid anhydride and imide of α,β-unsaturated carboxylic acid.

The conjugated diene-based polymer means a polymer containing at least one kind of conjugated diene. The conjugated diene includes 1,3-butadiene, isoprene (2-methyl-1,3-butadiene), 2,3-dimethyl-1,3-butadiene and 1,3-pentadiene. It is possible that a part or all parts of the unsaturated bond of the polymer is reduced by hydrogenation.

The conjugated diene-aromatic vinyl hydrocarbon-based copolymer is defined as a copolymer of conjugated diene and aromatic vinyl hydrocarbon, including block copolymer and random copolymer. The conjugated diene includes 1,3-butadiene and isoprene. The aromatic vinyl hydrocarbon includes styrene. It is possible that a part or all parts of unsaturated bond other than the double bond except the aromatic ring of the conjugated diene-aromatic vinyl hydrocarbon-based copolymer is reduced by hydrogenation.

The impact modifier may be an ethylene/methacrylic acid copolymer or its salt in which a part or all of carboxylic acids of the copolymer has been substituted by sodium, lithium, potassium, zinc or calcium ion. It may also be ethylene/propylene-g-maleic anhydride copolymer, ethylene/butene-1-g-maleic anhydride copolymer or the like.

The additive may be an antioxidant or a thermostabilizer (hindered phenols, hydroquinones, phosphites or substitute thereof, copper halide, iodine compound or the like), a weathering agent (based on resorcinol, salicylate, benzotriazole, benzophenone, hindered amine system), a release agent or a lubricant (aliphatic alcohol, aliphatic amide, aliphatic bis-amide, bis-urea, polyethylene wax or the like), a colorant (cadmium sulfide, phthalocyanine, carbon black or the like), a dye (nigrosin, aniline black or the like), a plasticizer (octyl p-hydroxybenzoate, N-butyl benzene sulfonamide or the like), an antistatic agent (alkyl sulfate-type anion-based antistatic agent, quarternary ammonium salt-type cation-based antistatic agent, non-ionic antistatic agent such as polyoxyethylene sorbitan monostearate, betaine-based amphoteric antistatic agent), a fire-retardant (melamine cyanurate, hydroxide such as magnesium hydroxide and aluminium hydroxide, ammonium polyphosphate, brominated polystyrene, brominated polyphenylene oxide, brominated polycarbonate, brominated epoxy resin, or a combination of these bromine-based fire-retardant and antimony trioxide) or the like. It is possible to contain two or more kinds thereof.

Our fiber-reinforced thermoplastic resin base material can be obtained by impregnating continuous fiber base material with thermoplastic resin in the presence of residual voids.

The impregnation may be performed by: a film method in which reinforcing fiber bundles are impregnated with melted thermoplastic film under pressure; a commingling method in which fibrous thermoplastic resin and reinforcing fiber bundles are blended and spun to melt and pressurize the fibrous thermoplastic resin to impregnate the reinforcing fiber bundles with thermoplastic resin; or a powder method in which a reinforcing fiber bundle is impregnated with powdery thermoplastic resin after dispersed among fibers of reinforcing fiber bundle melted and pressurized, or a takeout method in which a reinforcing fiber bundle is immersed and pressurized in melted thermoplastic resin to impregnate the reinforcing fiber bundle with the thermoplastic resin. It is preferable that the impregnation method is the takeout method, capable of preparing fiber-reinforced thermoplastic resin base materials having various thicknesses and various fiber volume contents.

In our fiber-reinforced thermoplastic resin base material, it is possible that a laminate consisting of two or more continuous fiber base material layers is impregnated with thermoplastic resin on the surface and between the layers. The two or more continuous fiber base material layers make it easy to adjust the size.

In our fiber-reinforced thermoplastic resin base material, it is preferable that the reinforcing fiber is contained by 30 vol% or more and 70 vol% or less in total 100 vol% of fiber-reinforced thermoplastic resin base material. The reinforcing fiber of 30 vol% or more can improve the strength of shaped product made of fiber-reinforced thermoplastic resin base material. It is more preferably 40 vol% or more, preferably 50 vol% or more. On the other hand, the reinforcing fiber of 70 vol% or less can easily impregnate the reinforcing fiber with thermoplastic resin. It is more preferably 65 vol% or less, preferably 60 vol% or less.

Reinforcing fiber volume content Vf [vol%] of the fiber-reinforced thermoplastic resin base material is calculated by Formula 2 from mass W0 [g] of the fiber-reinforced thermoplastic resin base material and mass W1 [g] of residual reinforcing fiber after burning out the thermoplastic resin component for 30 min at 500°C in air.

(Formula 2)

$$Vf \ [vol\%] = (W1/\rho f)/\{W1/\rho f+(W0-W1)/\rho 1\} \times 100$$

pf: Reinforcing fiber density [g/cm$^3$]

pr: Thermoplastic resin density [g/cm$^3$]

In our fiber-reinforced thermoplastic resin base material, voids are formed intermittently in the fiber orientation direction. The voids formed intermittently in the fiber orientation direction can improve the drape property. The said intermittently formed voids include a substantively continuous void of which part is locally filled with thermoplastic resin as well as voids formed continuously in the fiber orientation direction.

In our fiber-reinforced thermoplastic resin base material, it is preferable that a void content (void ratio) is 10% to 60%. The void ratio of 10% or more can improve the drape property of the fiber-reinforced thermoplastic resin. The void ratio of 60% or less can reduce breakage in the layer so that handling ability of the fiber-reinforced thermoplastic resin base material improves.

The void ratio of fiber-reinforced thermoplastic resin base material is measured by observing a section in the thickness direction of the fiber-reinforced thermoplastic resin base material as follows. A sample of fiber-reinforced thermoplastic resin base material embedded in epoxy resin is polished so that the section in the thickness direction of the fiber-reinforced thermoplastic resin base material is well observed. The polished samples are photographed at magnification of 400 times with an ultra deep color 3D shape measurement microscope VHX-950F (controller part)/VH-Z100R (measurer part) (made by Keyence Corporation). The shooting range is 500μm width × thickness of fiber-reinforced thermoplastic resin base material. The void ratio is calculated by Formula 3 from the areas of the base material section and voids in the shot image.

(Formula 3)

$$\text{Void ratio [\%]} = \text{(total area occupied by voids)/(total area of fiber-reinforced thermoplastic resin base material)} \times 100$$

In our fiber-reinforced thermoplastic resin base material, it is preferable that the continuous fiber base material is impregnated with thermoplastic resin by 20 μm or more and 60 μm or less. The impregnation of 10 μm or more per side of fiber-reinforced thermoplastic resin base material can reduce breakage in the layer so that handling ability of the fiber-reinforced thermoplastic resin base material improves. On the other hand, the impregnation distance of 30 μm or less per side of the fiber-reinforced thermoplastic resin base material can improve the drape property of the fiber-reinforced thermoplastic resin. It is preferable that the impregnation distance is 20% or more and 80% or less of fiber-reinforced thermoplastic resin base material thickness. The impregnation distance of 20% or more of fiber-reinforced thermoplastic resin base material thickness can reduce breakage in the layer so that handling ability of the fiber-reinforced thermoplastic resin base material improves. On the other hand, the impregnation distance of 80% or less of fiber-reinforced thermoplastic resin base material thickness can improve the drape property of the fiber-reinforced thermoplastic resin.

The impregnation distance of fiber-reinforced thermoplastic resin base material is calculated by observing a section in the thickness direction of the fiber-reinforced thermoplastic resin base material as follows. A sample of fiber-reinforced thermoplastic resin base material embedded in epoxy resin "EpoKwick" (registered trademark: made by Buehler Corporation) is cured at room temperature for 24 hours. Then, the cross section approximately perpendicular to the reinforcing fiber orientation direction of fiber-reinforced polymer alloy base material is polished to photograph the polished surface with an ultra deep color 3D shape measurement microscope VHX-950F (controller section) /VH-Z100R (made by Keyence Corporation) while changing the field of view.

(Measurement section)

The measurement method of impregnation distance will be explained with reference to Fig. 1. Randomly selected a hundred of reinforcing fiber single yarns 3 having no other single yarns on perpendicular line 7 drawn from the center of reinforcing single yarn 3 to continuous fiber base material surface 6 are subject to image processing to measure a distance from the intersection of outer periphery of reinforcing fiber single yarn 3 and perpendicular line 7 to outer periphery at far side of single yarn of which impregnation has been completed.

The distance between fibers is measured on both sides of fiber-reinforced thermoplastic resin base material. Since the base material is impregnated on both sides, the average value of distance between fibers measured with the hundred of reinforcing fiber single yarns 3 is doubled to calculate a representative value (impregnation distance).

Before measuring the thickness of fiber-reinforced thermoplastic resin base material, the fiber-reinforced thermoplastic resin base material is completely impregnated with resin as being pressured at a temperature above the melting point. The thicknesses measured at 5 points are averaged to calculate a representative value.

It is important in our fiber-reinforced thermoplastic resin base material that a whole surface of continuous fiber base material is coated with thermoplastic resin. The continuous fiber base material coated with thermoplastic resin contains thermoplastic resin uniformly on the base material surface, so that handling ability and formativeness can be improved. In our fiber-reinforced thermoplastic resin base material, it is preferable that alignment (straightness) of reinforcing fiber is uniform. Such a uniform alignment (straightness) can stably exhibit mechanical characteristics and drape property. The alignment (straightness) can be evaluated by any method including section observation method or supersonic wave inspection method.

In our fiber-reinforced thermoplastic resin base material, it is preferable that the impregnation distance of the thermoplastic resin is more than the thickness of thermoplastic resin forming the surface layer. The impregnation distance greater than the thickness of thermoplastic resin forming the surface layer can improve handling ability and formativeness.

The thickness of thermoplastic resin forming the surface layer of our fiber-reinforced thermoplastic resin base material is measured by observing a section in the thickness direction of the fiber-reinforced thermoplastic resin base material as follows. A sample of fiber-reinforced thermoplastic resin base material embedded in epoxy resin "EpoKwick" (registered trademark: made by Buehler Corporation) is cured at room temperature for 24 hours. Then, the cross section approximately perpendicular to the reinforcing fiber orientation direction of fiber-reinforced polymer alloy base material is polished to photograph the polished surface with an ultra deep color 3D shape measurement microscope VHX-950F (controller section) /VH-Z100R (made by Keyence Corporation) while changing the field of view.

The measurement method of thickness of thermoplastic resin forming the surface layer will be explained with reference to Fig. 1. With a cross section image of photographed fiber-reinforced thermoplastic resin base material, randomly selected a hundred of reinforcing fiber single yarns 3 having no other single yarns on perpendicular line 7 drawn from the center of reinforcing single yarn 3 to continuous fiber base material surface 6 are subjected to an image processing to measure a distance from the intersection of outer periphery of reinforcing fiber single yarn 3 and perpendicular line 7 to the surface of fiber-reinforced continuous fiber base material.

The distance is measured on both sides of fiber-reinforced thermoplastic resin base material. Since the base material is impregnated on both sides, the average value of measured distance with the hundred of reinforcing fiber single yarns 3 is doubled to calculate a representative value (thickness of thermoplastic resin forming the surface layer).

Hereinafter, the production method of our fiber-reinforced thermoplastic resin base material will be explained in detail. The production apparatus may comprise: a creel section to hold one or more bobbins around which a reinforcing fiber bundle has been rolled up before matrix resin impregnation; a feeding section to continuously feed the reinforcing fiber bundle out; an impregnation die to form a predetermined shape and impregnate the continuously fed reinforcing fiber bundle with melted matrix resin attached under pressure; and a cooling roll to cool and solidify the melted matrix resin to form a fiber-reinforced thermoplastic resin base material.

In the impregnation process, the continuously fed reinforcing fiber bundle is impregnated with melted matrix resin applied as being heated above the melting point or the glass transition temperature of the thermoplastic resin. The continuously fed reinforcing fiber bundle typically has a shape of thin layer. With the production apparatus, reinforcing fiber bundles are disposed in parallel to form a thin layer (tape-like shape) after being taken off a plurality of bobbins with a reinforcing fiber bundle consisting of 1,000 to 50,000 continuous single yarns of reinforcing fiber, and the reinforcing fiber bundles are put through yarn guides into the impregnation die retaining melted matrix resin. It is possible that a laminate of two or more layers of reinforcing fiber bundles is put into the impregnation die. The laminate of two or more layers of reinforcing fiber bundles can make it easy to adjust the size.

The impregnation die, which retains melted matrix resin fed from a feeder and is provided in the production apparatus, is installed toward the feed direction of reinforcing fiber bundle. The reinforcing fiber bundles are put into the impregnation die through an entrance hole provided for inserting the reinforcing fiber bundles at the inlet of impregnation die at an upstream position in the feeding direction of reinforcing fiber bundle. The impregnation die has an internal space of which cross section decreases intermittently toward the fiber feeding direction, and is provided with a slit-shaped nozzle having a cross section area smaller than that of top face of resin retainer section (at the side of introducing reinforcing fiber bundle). The reinforcing fiber bundles are pulled toward the nozzle by accompanying matrix resin flow so that they are impregnated with matrix resin by pressure of resin increasing toward the nozzle. It is possible that each single layer of reinforcing fiber bundles is introduced into the impregnation die to form a shape having a predetermined thickness while layers impregnated with matrix resin attached are laminated.

The reinforcing fiber bundles impregnated with melted matrix resin are continuously taken off the impregnation die to form a predetermined shape before solidification of matrix resin for impregnating reinforcing fiber bundles, and then the melted matrix resin is cooled and solidified in the cooling/solidifying process to form a predetermined shape of fiber-reinforced thermoplastic resin. Through a nozzle provided at the outlet of the impregnation die, the reinforcing fiber bundle impregnated with matrix resin is formed into a predetermined shape of cross section.

Such formed reinforcing fiber bundle goes through a cooling die or a cooling roll in which coolant flows to cool and solidify the melted matrix resin, so that a predetermined shape of fiber-reinforced thermoplastic resin base material is formed.

It is preferable that the reinforcing fiber bundle impregnated with matrix resin is taken off by a tension of 5 to 200 N per 12,000 single fibers. It is more preferably 5 to 150 N. The take-off tension of less than 5 N might tend to move the reinforcing fiber bundles to cause an overlap of adjacent reinforcing fiber bundles or a gap between adjacent fiber bundles so that the reinforcing fiber bundle is not uniformly impregnated with resin. On the other hand, the take-off tension of more than 200 N might converge reinforcing fiber bundles to deteriorate the impregnation of matrix resin. It is possible to adjust the take-off tension by setting a preliminary tension or a conveyance speed. The take-off tension can be higher by increasing the conveyance speed. It is also possible to adjust the take-off tension by setting a roll shape or a roll position.

Our fiber-reinforced thermoplastic resin base materials laminated can be partially welded to prepare an integrated laminate of fiber-reinforced thermoplastic resin.

The laminate may have any directional configuration such as UD laminate, 0°/90° laminate and pseudo isotropic laminate.

The welding may be performed by: a hot plate welding method to melt and solidify resin pressed with a heated plate onto the part to be welded; a vibration welding method to melt and solidify resin as vibrating the part to be welded; an ultrasonic welding method to melt matrix resin as giving ultrasonic vibration to the part to be welded; or the like. From viewpoints of size flexibility and efficient heating, it is preferable to employ the ultrasonic welding method.

Our fiber-reinforced thermoplastic resin base materials laminated can be heated and/or pressurized as needed to prepare a shaped product.

The heating and/or pressurizing may be performed by a method such as a press-molding method to pressurize the fiber-reinforced thermoplastic resin base material laminated and placed in a die or between pressing plates closed, a vacuum pressing method to perform a press-forming under vacuum in a die or a whole pressing machine, an autoclave molding method to pressurize and heat the forming materials of fiber-reinforced thermoplastic resin base material which is laminated in a die or between pressing plates and is placed in an autoclave, a bagging molding method to heat the forming material laminates which are wrapped with a film or the like and are pressurized by atmosphere pressure under vacuum in an oven, a wrapping tape method to heat a fiber-reinforced polymer alloy base material around which a tape is wound under tension in an oven, and an inner pressure molding method to pressurize a fiber-reinforced polymer alloy base material laminated in a die by injecting gas or liquid into cores in the die. Above all, it is preferable to employ the autoclave method or the vacuum pressing method from a viewpoint of less voids present in shaped products.

Our fiber-reinforced thermoplastic resin base material or its shaped product can be integrated to prepare a composite by an integrated molding such as insert molding and outsert molding, a productive adhesion such as thermal straightening, heat welding, vibration welding and ultrasonic molding, or an integration by using adhesive agent.

Our fiber-reinforced thermoplastic resin base material or its shaped product can be integrated with a molding base material or its shaped product, such as resin material or its shaped product, metal material or its shaped product and inorganic material or its shaped product. Above all, it is preferable to employ the resin material or its shaped product, or the metal material or its shaped product from a viewpoint of efficiently exhibited reinforcement. The resin material or its shaped product is advantageous for the adhesion strength. It is more preferable to employ fiber-reinforced thermoplastic resin made by impregnating reinforcing fiber mat having a fiber length of 5 to 100 mm from viewpoints of formability and mechanical characteristics. The metal material or its shaped product may be a high-tensile steel, aluminum alloy, titanium alloy, magnesium alloy or the like, which is selected according to characteristics required to the metal layer, metal member or metal component part.

The matrix resin constituting the molding material or its shaped product to be integrated with our fiber-reinforced thermoplastic resin base material may be a resin of which kind is the same as, or different from, a resin constituting the fiber-reinforced thermoplastic resin base material or its shaped product. It is preferable that they are the same resin so that the adhesion strength is enhanced. In a case that they are different kinds of resin, it is preferable that a resin layer is provided in the interface.

Our fiber-reinforced thermoplastic resin base material and its shaped product excellent in characteristics can be applied to airplane parts, motor parts, electric/electronic parts building materials, containers, daily necessities, daily articles and sanitary goods. It is preferable that the fiber-reinforced polymer alloy base material and its shaped product are applied to parts demanding stable mechanical properties, such as airplane engine peripheral parts, airplane exterior parts, vehicle frame as automobile body parts, automobile engine peripheral parts, automobile underhood parts, automobile gear parts, automobile interior parts, automobile exterior parts, intake or exhaust parts and engine cooling water parts, automobile electric component parts, or electric/electronic parts.

Specifically, the fiber-reinforced thermoplastic resin base material and its shaped product are applied to airplane engine peripheral parts such as fan blades, airplane parts such as landing gear pod, winglet, spoiler, edge, ladder, elevator, fairing and rib, automobile body parts such as sheets, front body, underbody, pillars, members, frames, beams, supports, rails and hinges, automobile engine peripheral parts such as engine cover, air intake pipe, timing belt cover, intake manifold, filler cap, throttle body and cooling fan, automobile underhood parts such as top and base of cooling fan or radiator tank, cylinder head cover, oil pan, brake piping, fuel tube and exhaust gas system parts, automobile gear parts such as gear, actuator, bearing retainer, bearing cage, chain guide and chain tensioner, automobile interior parts such as shift lever bracket, steering lock bracket, key cylinder, door inner handle, door handle cowl, indoor mirror bracket, air-conditioner switch, instrumental panel, console box, glove box, steering wheel and trim, automobile exterior parts such as front fender, rear fender, fuel lid, door panel, cylinder head cover, door mirror stay, tailgate panel, license garnish, roof rail, engine mount bracket, rear garnish, rear spoiler, trunk lid, rocker molding, molding, lamp housing, front grille, mudguard and side bumper, intake or exhaust parts such as air intake manifold, intercooler inlet, turbo charger, exhaust pipe cover, inner bush, engine mount, engine head cover, resonator and throttle body, engine cooling water system parts such as chain cover, thermostat housing, outlet pipe, radiator tank, alternator and delivery pipe, automobile electric component parts such as connector, wire harness connector, motor parts, lamp socket, sensor in-vehicle switch and combination switch, electric/electronic parts such as generator, motor, transformer, converter, voltage regulator, rectifier, resistor, inverter, relay, contact point for power, breaker, switch, knife switch, multipole rod, motor case, TV housing, note PC housing and internal parts, CRT display housing and internal parts, printer housing and internal parts, cell-phone housing and internal parts of cell-phone, and mobile PC or handheld mobile gear, electric parts such as IC, LED-adaptive housing, capacitor seat plate, fuseholder, gears, cases and cabinets, electronic parts such as connector, SMT-adaptive connector, card connector, jack, coil, coil bobbin, sensor, LED lamp, socket, resistor, relay, relay case, reflector, small switch, power supply parts, coil bobbin, capacitor, variable capacitor case, optical pick-up chassis, oscillator, terminal boards, transformers, plugs, printed circuit boards, tuners, speakers, microphones, headphones, small size motor, magnetic head base, power module, Si power module, SiC power module, semiconductor, liquid crystal, FDD carriage, FDD chassis, a motor brush holder, transformer material, parabolic antenna, computer parts, or the like.

[Examples]

Hereinafter, our invention will be explained in more detail with reference to Examples although our invention is not limited thereto. Physical properties are evaluated according to the following methods in Examples and Comparative examples.

[Volume content (Vf)]

Volume content Vf of the fiber-reinforced thermoplastic resin base materials obtained in Examples and Comparative examples are calculated by Formula (4) from mass W0 of the fiber-reinforced thermoplastic resin base material and mass W1 of residual reinforcing fiber left after heating the fiber-reinforced thermoplastic resin base material to burn out the resin component at 550°C in air for 240 min.

$$(\text{Formula } 4)$$

$$\text{Vf [vol\%]} = (\text{W1}/\rho f)/\{\text{W1}/\rho f + (\text{W0-W1})/\rho 1\} \times 100$$

$\rho f$: reinforcing fiber density [g/cm$^3$]
$\rho r$: resin composition density [g/cm$^3$]

[Void ratio and state of void]

Sections of the fiber-reinforced thermoplastic resin base materials obtained in Examples and Comparative examples are observed in the thickness direction as follows. Samples prepared by embedding fiber-reinforced thermoplastic resin base material cross section perpendicular to the reinforcing fiber orientation direction with epoxy resin are polished to make a cross section in the thickness direction of the fiber-reinforced thermoplastic resin base material well observed. The polished samples are photographed at magnification of 400 times with an ultra deep color 3D shape measurement microscope VHX-950F (controller part)/VH-Z100R (measurer part) (made by Keyence Corporation). Images are taken within (thickness)×(500μm width) of the fiber-reinforced thermoplastic resin base material. Areas and voids occupied by the fiber-reinforced thermoplastic resin base materials are measured with the taken images to calculate a void ratio by Formula (5).

(Formula 5)

$$\text{Void ratio [\%]} = (\text{total area occupied by voids})/(\text{total area of fiber-reinforced thermoplastic resin base material}) \times 100$$

The void connection is evaluated by observing the thickness directional section of fiber-reinforced thermoplastic resin base materials obtained in Examples and Comparative examples. The cross section in parallel with the reinforcing fiber orientation direction of fiber-reinforced thermoplastic resin base material is observed at magnification of 200 times with an ultra deep color 3D shape measurement microscope VHX-950F (controller part)/VH-Z100R (measurer part) (made by Keyence Corporation). The fiber-reinforced thermoplastic resin base material is divided equally into 5 parts in the width direction to observe the cross section in parallel with the reinforcing fiber orientation direction over 100mm length. The void connection of the fiber-reinforced thermoplastic resin base material is evaluated into the following two levels in which "Good" is the acceptable level.
Good: There are 4 or more of base materials having a connected void.
NG: There are less than 4 of base materials having a connected void in the same place.

[Surface quality]

The fiber-reinforced thermoplastic resin base materials obtained in Examples and Comparative examples are visually observed for the surface quality evaluation. The surface quality is evaluated into the following two levels in which "Good" is the acceptable level.
Good: The surface has no split and no exposure of reinforcing fiber.
NG: The surface has splits or exposures of reinforcing fiber.

[Raw materials]

The following raw materials are used in Examples and Comparative examples. Carbon fiber bundle: T700S-12K, made by Toray Industries, Inc.

Thermoplastic resin:

- Polyamide 6 and polyamide 6/66, "Amilan" (registered trademark) made by Toray Industries, Inc.
- Polyphenylene sulfide, "Torelina" (registered trademark) made by Toray Industries, Inc.
- Polyetheretherketone, "VICTREX" (registered trademark) made by Victrex Japan Inc.
- Polyetherimide, "ULTEM" (registered trademark) made by SABIC

[Table 1]

| | | | | Example 1 | Example 2 | Example 3 | Example 4 | Example 5 | Comparative example 1 |
|---|---|---|---|---|---|---|---|---|---|
| Raw materials | Reinforcing fiber | | | Carbon fiber | Carbon fiber | Carbon fiber | Carbon fiber | Carbon fiber | Carbon fiber |
| | Resin weight Ratio | Polyamide 6 | % | 100 | - | - | - | - | 100 |
| | | PEEK | % | - | 100 | 80 | 80 | 60 | - |
| | | PPS | % | - | - | - | 20 | 20 | - |
| | | PEI | % | - | - | 20 | - | 20 | - |
| Tape Characteristic | Volume content | | % | 60 | 60 | 60 | 60 | 60 | 60 |
| | Thickness | | mm | 0.1 | 0.1 | 0.1 | 0.1 | 0.1 | 0.1 |
| Evaluation | Impregnation distance | | μm | 66 | 62 | 51 | 60 | 56 | 19 |
| | Surface layer thickness | | μm | 14 | 15 | 20 | 16 | 17 | 32 |
| | Void ratio | | % | 20 | 22 | 18 | 20 | 21 | 30 |
| | Void connection | | - | ○ : Good | ○ : Good | ○ : Good | ○ : Good | ○ : Good | ○ : Good |
| | Surface quality | | - | ○ : Good | ○ : Good | ○ : Good | ○ : Good | ○ : Good | × : NG |

EP 3 842 478 A1

(Example 1)

Raw materials blended by the composition shown in Table 1 were fed to a twin screw extruder. The twin screw extruder was a twin screw extruder HK-25D (41D) made by PARKER CORPORATION of which twin screws rotating in the same direction had a screw diameter of 25mm and L/D of 41. The melt kneading was performed at a predetermined kneading temperature and screw rotation speed to discharge a strand-shaped melted resin from the outlet. The discharged strand-shaped melted resin was cooled through a cooling bath and cut as being taken by a pelletizer to obtain pellet-shaped thermoplastic resin samples. The obtained thermoplastic resin was evaluated as described above. Table 1 shows evaluation results.

Reinforcing carbon fiber bundles were continuously taken through yarn passage guides off six bobbins on which each carbon fiber bundle was wound. The carbon fiber bundles were impregnated with matrix resin ("Amilan" (registered trademark): polyamide 6 made by Toray Industries, Inc.) by letting the bundles go through an impregnation die retaining the matrix resin constantly supplied from a feeder of matrix resin. The carbon fiber bundle impregnated with polyamide 6 matrix resin under resin pressure in the impregnation die was continuously taken off with a take-off roll at take-off speed of 1m/min through the slit of the impregnation die. The carbon fiber bundle taken off was cooled through the cooling roll to solidify polyamide 6 resin so that the continuous fiber-reinforced thermoplastic resin base material was wound by a winder. The obtained fiber-reinforced thermoplastic resin base material had width of 50mm and contained unidirectionally oriented reinforcing fibers. The obtained fiber-reinforced thermoplastic resin base material was evaluated as described above. Table 1 shows evaluation results.

(Examples 2-5)

A fiber-reinforced thermoplastic resin base material was prepared by the same method as Example 1, except for the matrix resin changed as shown in Table 1. The obtained fiber-reinforced thermoplastic resin base material was evaluated as described above. Table 1 shows evaluation results.

(Comparative example 1)

Reinforcing carbon fiber bundles were continuously taken through yarn passage guides off six bobbins on which each carbon fiber bundle was wound. The carbon fiber bundles were adhered electrostatically to electric-charged matrix resin powder ("Amilan" (registered trademark): polyamide 6 made by Toray Industries, Inc.). The electrostatically adhered powder was heated above the melting point to make the carbon fiber bundle impregnated with matrix resin. The obtained fiber-reinforced thermoplastic resin base material had width of 50mm and contained unidirectionally oriented reinforcing fibers. The obtained fiber-reinforced thermoplastic resin base material was evaluated as described above. Table 1 shows evaluation results. It is found that our fiber-reinforced thermoplastic resin base material is excellent in handling ability and formativeness according to the comparison between Examples 1-5 and Comparative example 1.

Industrial Applications of the Invention

Our fiber-reinforced thermoplastic resin base material can be formed into a desired shape by a forming method such as autoclave forming, press molding and film forming. Our shaped product obtained by forming the fiber-reinforced thermoplastic resin base material is applicable to airplane parts, such as airplane engine peripheral parts, airplane interior parts and airplane exterior parts, automobile parts such as vehicle frame, automobile engine peripheral parts, automobile underhood parts, automobile gear parts, automobile interior parts, automobile exterior parts, intake or exhaust parts, engine cooling water parts and automobile electric component parts, or electric/electronic parts such as LED reflector and SMT connector.

Explanation of symbols

    1: fiber-reinforced thermoplastic resin base material
    2: thermoplastic resin
    3: reinforcing fiber single yarn
    4: impregnation distance
    5: surface layer resin
    6: base material surface
    7: perpendicular line

**Claims**

1. A fiber-reinforced thermoplastic resin base material comprising a continuous fiber base material consisting of continuous reinforcing fibers and a thermoplastic resin applied to a surface of the continuous fiber base material, in which the continuous fiber base material containing a void is impregnated with the thermoplastic resin solidified to coat a whole of the surface of the continuous fiber base material, the void being formed intermittently in the fiber orientation direction.

2. The fiber-reinforced thermoplastic resin base material according to claim 1, wherein the thermoplastic resin has an impregnation distance of 20 $\mu$m to 60 $\mu$m corresponding to 20% to 80% of a thickness of the fiber-reinforced thermoplastic resin base material.

3. The fiber-reinforced thermoplastic resin base material according to claim 1 or 2, wherein the thermoplastic resin has an impregnation distance of the thermoplastic of more than a surface layer thickness of the thermoplastic resin.

4. The fiber-reinforced thermoplastic resin base material according to any one of claims 1 to 3, wherein the thermoplastic resin is selected from a group of polyphenylene sulfide resin (PPS), polyarylene ether ketone resin (PAEK), polyether sulfone resin (PES), polyetherimide (PEI) and liquid crystal polymer (LCP), or is a polymer alloy comprising two or more kinds selected from the group.

5. The fiber-reinforced thermoplastic resin base material according to claim 4, wherein the thermoplastic resin is the polymer alloy.

6. The fiber-reinforced thermoplastic resin base material according to claim 5, wherein the polymer alloy has a bicontinuous phase structure having a structural period of 0.001 to 10 $\mu$m or a sea-island structure consisting of island phase and sea phase having a particle diameter of 0.001 to 10 $\mu$m.

7. The fiber-reinforced thermoplastic resin base material according to any one of claims 1 to 6, wherein the thermoplastic resin is applied to a laminate consisting of two or more layers of the continuous fiber base material on a surface and between the layers.

8. The fiber-reinforced thermoplastic resin base material according to any one of claims 1 to 7, wherein a void ratio is 10% to 60%.

9. The fiber-reinforced thermoplastic resin base material according to any one of claims 1 to 8, wherein the reinforcing fiber is a carbon fiber.

10. A laminated product comprising a laminate of partially welded fiber-reinforced thermoplastic resin base materials according to any one of claims 1 to 9.

11. The laminated product according to claim 10, wherein the fiber-reinforced thermoplastic resin base materials are partially welded by an ultrasonic-welding.

12. A shaped product comprising a fiber-reinforced thermoplastic resin base material according to any one of claims 1 to 11.

13. A composite shaped product comprising: a fiber-reinforced thermoplastic resin base material according to any one of claims 1 to 9; or a shaped product according to claim 12, wherein the base material or the shaped product is integrated with a metal material or a shaped product of the metal, or with a resin material or a shaped product of the resin.

FIG. 1

## INTERNATIONAL SEARCH REPORT

| International application No. |
|---|
| PCT/JP2019/032395 |

### A. CLASSIFICATION OF SUBJECT MATTER
Int.Cl. C08J5/04(2006.01)i

According to International Patent Classification (IPC) or to both national classification and IPC

### B. FIELDS SEARCHED

Minimum documentation searched (classification system followed by classification symbols)
Int.Cl. C08J5/04-5/10, C08J5/24, B29B11/16, B29B15/08-15/14, B29C39/00-39/44, B29C43/00-43/58, B29C70/00-70/88, B32B1/00-43/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2011-006578 A (MITSUBISHI PLASTICS, INC.) 13 January 2011, claims, paragraphs [0020], [0023], [0028], [0045], [0050]-[0073] (Family: none) | 1-5, 7-9, 12<br>4-6, 10-11, 13 |
| X<br>Y | JP 2016-531026 A (LG HAUSYS, LTD.) 06 October 2016, claims, paragraphs [0051], [0066]-[0079], fig. 2 & US 2016/0159054 A1, claims, paragraphs [0050], [0065]-[0077], fig. 2 & WO 2015/016518 A1 & EP 3028852 A1 & KR 10-2015-0016083 A & CN 105473331 A | 1-3, 7-9, 12<br>4-6, 10-11, 13 |

☒ Further documents are listed in the continuation of Box C.　　☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 13 November 2019 (13.11.2019) | 26 November 2019 (26.11.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

International application No.

PCT/JP2019/032395

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2010-274560 A (TORAY INDUSTRIES, INC.) 09 December 2010, claims, paragraphs [0006], [0010], [0012], [0059] (Family: none) | 6 |
| Y | JP 2018-062103 A (TOYOTA MOTOR CORP.) 19 April 2018, claims, paragraph [0028] (Family: none) | 10-11, 13 |
| Y | JP 2015-131394 A (TORAY INDUSTRIES, INC.) 23 July 2015, claims, paragraph [0018] (Family: none) | 10-11, 13 |
| A | JP 2010-202824 A (TEIJIN LTD.) 16 September 2010, paragraph [0022] (Family: none) | 1-13 |

Form PCT/ISA/210 (continuation of second sheet) (January 2015)

**EP 3 842 478 A1**

## REFERENCES CITED IN THE DESCRIPTION

**Patent documents cited in the description**

- JP 2016078360 A
- JP 2003165861 A